# EUROPEAN PATENT SPECIFICATION

(11) **EP 1 429 886 B1**
(45) Date of publication and mention of the grant of the patent: **01.03.2006**
(21) Application number: 02766042.2
(22) Date of filing: 20.08.2002
(51) Int. Cl.: B23K 20/12, B23K 37/053, F16C 3/02

(54) **SYNCHRONISED TUBULAR FRICTION WELDING ARRANGEMENT AND METHOD**
SYNCHRONISIERTE RÖHRENFÖRMIGE REIBSCHWEISSANORDNUNG UND -VERFAHREN
AGENCEMENT ET METHODE DE SOUDAGE PAR FRICTION SYNCHRONISE

(30) Priority: 20.08.2001 US 313739 P; 20.08.2001 US 313734 P; 20.08.2001 US 313741 P
(43) Date of publication of application: 23.06.2004
(73) Proprietor: Veri-Tek International, Corp., Wixom, MI 48393-2019 (US)
(72) Inventor: JURANITCH, James, C., Oconomowoc, WI 53066 (US); OLSCHEFSKI, Robert, D., New Hudson, MI 48165 (US)
(74) Representative: Baldwin, Mark
(86) International application number: PCT/US2002/026562
(87) International publication number: WO 2003/066271

(56) References cited:
- EP-A- 0 920 948
- WO-A-00/25973
- FR-A- 1 416 365
- FR-A- 1 455 696
- US-A- 3 269 002
- US-A- 3 678 566
- US-A- 3 684 856
- US-A- 3 800 995
- US-A- 4 060 190
- US-A- 4 087 036
- PATENT ABSTRACTS OF JAPAN vol. 1999, no. 08, 30 June 1999 (1999-06-30) & JP 11 077338 A (MITSUBISHI HEAVY IND LTD), 23 March 1999 (1999-03-23)
- PATENT ABSTRACTS OF JAPAN vol. 2000, no. 13, 5 February 2001 (2001-02-05) & JP 2000 288746 A (KAWASAKI STEEL CORP), 17 October 2000 (2000-10-17)

## Description

This invention relates generally to an arrangement and a method for welding first and second shaft termination elements at respective first and second ends of a cylindral shaft and more particularly, to a welding arrangement that will weld tubular products that require low cycle time, minimal misalignment, and near perfect radial alignment of the welded ends.

### DESCRIPTION OF THE RELATED ART

To date many tubular products have been manufactured with the appropriate ends attached by conventional welding techniques. In the automotive industry, for example, particularly drive shaft manufacturing, the weld yokes, (or ends) often are pressed onto or into a tube end. After the press operation; the ends typically are welded by wire feed or other conventional welding techniques. The required press fit renders this method of manufacturing to be plagued with significant cost. It is of greater significance that only one end of the drive shaft is completed at a time. That is, after the completion of the first weld, the tube is turned over and reinserted into the known welding machine. Almost always the radial alignment and concentricity between the two ends is lost before the second weld yoke is attached. This form of manufacture, therefore, has significant inherent problems that are common in the industry. In addition, conventional wire feed welding imposes limits on the minimum wall thickness that can reliably be joined in production, and the quality of the weld cannot readily be ascertained.

In another known system, known magna pulse and magna arc methods are used in the construction of drive shafts and other tubular products. Again, typically one side of the tubular product is completed at a time. This causes set up problems that limit the ability to maintain radial alignment and verification of the quality of the weld is difficult to accomplish. Double ended magna arc or pulse welders are complex, difficult to repair and maintain, and expensive. In addition, They also require that extremely close tolerances be in squareness, cleanliness, and flatness of the components prior to and during the weld process to maintain a proper arc gap. This is difficult to accomplish and maintain in a production environment.

JP-A-11 077 338 discloses an arrangement for friction butt welding first and second elongate elements in alignment with a predetermined axis, the arrangement comrpising:
a first chuck assembly, which grips said first elongate element at a first end thereof such that the first elongate element is aligned with said predetermined axis, said first end is enclosed by the first chuck assembly and a second end thereof projects from the first chuck assembly;
a rotary drive coupled to said first chuck assembly;
a second chuck assembly, which grips said second elongate element at a first end thereof such that said second elongate element is aligned with said predetermined axis, said first end is enclosed by said second chuck assembly and a second end thereof projects from said second chuck assembly for engagement with the second end of the first elongate element; and
a chuck assembly drive for translating said second chuck assembly between first and second axial positions.

In use, said first chuck assembly is rotated by said rotary drive while said second chuck assembly, which does not rotate, is translated towards said first chuck assembly to press the second ends of the two elongate elements together while the first elongate element rotates relative to the second elongate element (which does not rotate) to produce a friction butt weld at said second end. This arrangement is not capable of simultaneously welding respective shaft termination elements to the ends of a cylindrical shaft.

US-A-4 060 190, which is considered to represent the most relevant state of the art, discloses an apparatus and method for welding end parts to a central shaft. This application discloses the use of only one chuck assembly for clamping the central part at the two extremities, the clamping means being rotated all together through a pinion. This central clamp is therefore fixedly positioned at the centre part of the welding machine. The two end parts are fixed in end part receivers which are translated towards the central part for welding through the use of drive arrangements, as the central part is rotated.

It is, therefore, an object of this invention to provide a system wherein the weld ends of a tubular assembly can be welded simultaneously in a simple, cost-effective and production robust manner.

It is also another object of this invention to provide a system wherein the weld ends of a tubular assembly can be maintained in a predetermined axial relationship as the ends are welded simultaneously.

It is another object of this invention to provide a welding arrangement that obviates the need for the press fit process and the associated close tolerance machining required for a press fit, as well as the additional material required on the yokes for the internal press fit.

It is also an object of this invention to provide a process that is cost effective, requires a short cycle time, holds near perfect concentricity of the tubular elements, and maintains near perfect radial alignment.

It is a further object of this invention to provide a welding system wherein a plurality of parameters that affect product quality can be recorded during the process to verify consistent weld quality.

It is additionally an object of this invention to provide an arrangement that can be applied in the welding of flat plate(s) to tubes or other forms of cylindrical stock.

It is yet a further object of this invention to provide a high level of precision and low cycle time in the manufacture of drive shafts, to preclude drive shafts that suffer from linear or radial misalignment in their welded ends, whereby high levels of noise, vibration and harshness (NVH) would result.

### Summary of the Invention

The foregoing objects are achieved by the invention, which provides a n arrangement for welding first and second shaft termination elements at respective first and second ends of a cylindrical shaft, and in alignment with a predetermined axis, the arrangement comprising:
a shaft receiver for receiving the cylindrical shaft;
a first chuck assembly having a plurality of gripping elements for gripping the cylindrical shaft at the first end thereof and maintaining the cylindrical shaft in alignment with the predetermined axis;
a second chuck assembly having a plurality of gripping elements for gripping the cylindrical shaft at the second end thereof in alignment with the predetermined axis;
a rotary drive coupled to said first chuck assembly for rotary motion of the first chuck assembly with gripping elements;
a chuck assembly drive for translating said second chuck assembly between first and second axial positions;
a first shaft termination element receiver for receiving the first shaft termination element and axially translating same to a first installation position in alignment with the predetermined axis;
a first installation drive arrangement for urging the first shaft termination element axially toward the cylindrical shaft as the cylindrical shaft is rotated in response to said rotary drive;
a second shaft termination element receiver for receiving the second shaft termination element and axially translating same to a second installation position in alignment with the predetermined axis; and
a second installation drive arrangement for urging the second shaft termination element axially toward the cylindrical shaft as the cylindrical shaft is rotated in response to said rotary drive.

The invention also includes a method of welding first and second shaft termination elements at respective first and second ends of a cylindrical shaft, and in alignment with a predetermined axis, the method comprising the steps of:
loading a cylindrical shaft having first and second ends onto a shaft receiver located at a proximal location, whereby the cylindrical shaft is supported so that its longitudinal axis is substantially coaxial with the predetermined axis;
loading the first shaft termination element onto a first shaft termination element receiver;
loading the second shaft termination element, onto a second shaft termination element receiver;
translating the first shaft termination element receiver whereby a principal axis of the first shaft termination element is disposed coaxially with the predetermined axis;
translating the second shaft termination element receiver whereby a principal axis of the second shaft termination element is disposed coaxially with the predetermined axis;
axially urging the cylindrical shaft toward the first shaft termination element and through a first chuck assembly;
actuating the jaws of the first chuck assembly whereby the cylindrical shaft is clamped in the region of the first end thereof to a transaxial location where the longitudinal axis of the cylindrical shaft is coaxial with the predetermined axis;
axially translating the second shaft termination element and a second chuck assembly to a predetermined axial location in the region of the second end of the cylindrical shaft;
actuating the jaws of a second chuck assembly whereby the cylindrical shaft is clamped in the region of the second end thereof to a transaxial location where the longitudinal axis of the cylindrical shaft is coaxial with the predetermined axis;
rotating the first chuck assembly at a predetermined rate of rotation;
urging the first shaft termination element axially into communication with the first end of the cylindrical shaft; and
urging the second shaft termination element axially into communication with the second end of the cylindrical shaft.

In a specific illustrative embodiment of the welding arrangement, there is additionally provided a shaft receiver drive arrangement for translating the shaft receiver between a first shaft receiver position where the cylindrical shaft is supported by the shaft receiver at a transaxial location that is substantially in axial alignment with the first chuck assembly, and a second shaft receiver position distal from the first shaft receiver position.

In one embodiment of the welding arrangement, the cylindrical shaft is axially displaceable with respect to the shaft receiver, and the chuck assembly drive includes a pneumatic drive.

In a further embodiment of the welding arrangement, the rotatory drive urges the first chuck assembly to rotate at approximately between 600 to 4000 rpm.

The plurality of first gripping elements of the first chuck assembly includes, in certain embodiments, first and second sets of jaws. The first set of jaws is arranged to communicate with the cylindrical shaft prior to the second set of jaws, and may be regulated by mechanical cam. The first set of jaws may additionally include a precision alignment arrangement for locking the cylindrical shaft at a predetermined axial location. Such a precision alignment arrangement includes a plurality of angulated guideways associated with respective jaws of the first set of jaws, the angulated guideways having a precise angular orientation with respect to one another. The plurality of angulated guideways are equiangularly distributed about the predetermined axis.

The second set of jaws is provided, in certain embodiments, with a clamping arrangement for locking the cylindrical shaft at the predetermined axial location determined by the first set of jaws. Preferably, the first and second sets of jaws are hydraulically actuated, whereby the second set of jaws is operated in response to a first hydraulic pressure applied to the first set of jaws exceeding a predetermined break-over first hydraulic pressure value. The break-over first hydraulic pressure has a magnitude sufficient to cause the first set of jaws to lock the cylindrical shaft at the predetermined axial location.

In a further embodiment of the welding arrangements there is provided a non-rotating housing about which the first chuck assembly is rotated by the rotatory drive. The first chuck assembly is installed on a rotatable housing, and there is further provided a fluid delivery arrangement disposed at the interface of the non-rotating and the rotatable housings. In one embodiment of the welding arrangement ; the fluid delivery arrangement is provided with a first fluid channel system for supplying pressurized clamping fluid for causing the first chuck assembly to grip the cylindrical shaft and a second fluid channel system for supplying pressurized unclamping fluid for causing the first chuck assembly to release the cylindrical shaft. There is provided in the first fluid channel system a first fluid passageway at the interface of the non-rotating and the rotatable housings. In this embodiment, the second fluid channel system has a first fluid passageway at the interface of the non-rotating and the rotatable housings, and there is further provided a pressurized fluid supply port installed on the non-rotating housing. Additionally, there is provided a fluid drain port installed on the non-rotating housing.

A bearing arrangement is interposed between the non-rotating and the rotatable housings, and there is further provided a fluid seal for limiting flow of a pressurized fluid through the bearing arrangement.

In a further embodiment of the welding arrangement the first and second installation drive arrangements urge the first and second shaft termination elements, respectively, axially toward the cylindrical shaft as the cylindrical shaft is rotated by applying respective first and second axial forces in respective axially opposing directions. The respective first and second axial forces each are exerted at respective magnitudes of axial force for respective determined periods of time. At least one of the first and second axial forces is applied at a plurality of magnitudes of axial force for respective determined sequential periods of time. In another embodiment, at least one of the first and second axial forces is applied in response to a distance of axial displacement resulting from the application of the respective first and second axial forces. The respective determined sequential periods of time correspond to engagement phases of an installation of the first shaft termination element. In an advantageous embodiment, the engagement phases of the installation of the first shaft termination element comprise a heating phase and a forging phase. In another embodiment, the first installation drive arrangement is operated to apply approximately between 1.1 to 4.4 KN (250 to 1000 pounds) of axial force for a duration of approximately between 1.5 and 3 seconds during the heating phase, and applies approximately between 11.1 to 53.4 KN (2500 to 12000 pounds) of axial force for a duration of approximately between 2 and 5 seconds during the forging phase.

Prior to performing the heating and forging phases there is provided in one embodiment the further phase of scrubbing the first shaft termination element against the first end of the cylindrical shaft. In an embodiment applied to a drive shaft for a vehicle, the first installation drive arrangement is operated to apply approximately between 0.6 to 1.5 KN (50 to 350 pounds) of axial force for a duration of approximately between 0.5 and 2 seconds during the further phase of scrubbing.

In a still further embodiment of the welding arrangement, at least one of the first and second axial forces is applied in response to a temperature resulting from the application of the respective first and second axial forces, the temperature being controlled in response to the modulation of the weld force between tube ends and the respective shaft termination element while rotating the tube. The cylindrical shaft is rotated at a fixed preselected speed that is determined in response to the diameter of the cylindrical shaft. In some embodiments, the cylindrical shaft is rotated at a speed that achieves a determined rotational surface speed of the cylindrical shaft.

In one embodiment of the method of the invention, prior to performing the step of axially translating, there is further provided the step of withdrawing the shaft receiver to a distal location.

In a further embodiment of the method, there are further provided the steps of:
first releasing a first axial force applied to the first shaft termination element in response to the step of first urging;
second releasing a second axial force applied to the second shaft termination element in response to the step of second urging;
releasing the jaws of the second chuck; and
withdrawing axially the second chuck assembly to a distal axial location.

The further may include the additional steps of:
restoring the shaft receiver to the proximal location;
releasing the jaws of the first chuck; and
reverse axially urging the cylindrical shaft out of the first chuck assembly, whereby the cylindrical shaft is supported by the shaft receiver.

In some embodiments of the method, the step of first actuating includes the further steps of:
first subset actuating a first subset of jaws;
controlling the performance of the step of first subset actuation to ensure all of the jaws in the first subset of jaws maintain an equal radial relationship during the step of first subset actuation with respect to the predetermined axis.

In further embodiments of the method, the step of first actuating includes the further step of second subset actuating a second subset of jaws, the step of second subset actuating being performed after the step of first subset actuating. The step of first actuating is performed in response to a step of applying an hydraulic pressure, and the step of second subset actuating is performed in response to the hydraulic pressure exceeding a predetermined hydraulic pressure magnitude.

### Brief Description of the Drawings

Comprehension of the invention is facilitated by reading the following detailed description, in conjunction with the annexed drawings, in which:
Fig. 1 is a simplified schematic representation of a synchronous welding system constructed in accordance with the principles of the invention, as viewed from above;
Fig. 2A is a simplified schematic front representation of the synchronous welding system of Fig. 1;
Fig. 2B is a simplified schematic side representation of the synchronous welding system of Fig. 2A;
Fig. 3A is a simplified schematic front representation of the synchronous welding system of Fig. 1 showing a tubular portion of a drive shaft having been translated to the left so as to be within a drive chuck arrangement and in position for communication with a first end piece;
Fig. 3B is a simplified schematic side representation of a portion of the synchronous welding system of Fig. 3A showing a drive shaft support in a withdrawn position;
Fig. 4 is a simplified schematic front representation of the synchronous welding system of Fig. 1 in the condition of Fig. 3A and further showing that a driven chuck arrangement is to be translated toward the left to engage the drive shaft;
Fig. 5 is a simplified schematic front representation of the synchronous welding system of Fig. 1 in the condition of engagement of the driven chuck arrangement with the drive shaft, and further shows that the end pieces are urged in the direction of the arrows to effect friction welding as the driven chuck arrangement is rotated, with the chucks engaged;
Fig. 6 is a simplified schematic front representation of the synchronous welding system of Fig. 1 in the condition of release of the axial force (in the direction of the arrows) arrangement with the drive shaft and the driven chuck in a disengaged condition;
Fig. 7 is a simplified schematic front representation of the synchronous welding system of Fig. 1 with the driven chuck assembly having been restored to the left, disengaged from the drive shaft;
Fig. 8 is a simplified schematic side representation of a portion of the synchronous welding system of Fig. 8 showing the drive shaft support in a deployed position for supporting the drive shaft;
Fig. 9 is a simplified schematic front representation of the synchronous welding system of Fig. 1 with the drive chuck assembly in the released condition, and the completed drive shaft with the end pieces affixed thereto;
Fig. 10 is a simplified schematic partially phantom representation of the driven chuck assembly and the stationary fixture;
Figs. 11A, 11B, and 11C are respective simplified schematic front, cross-sectional side, and back representations of a chuck arrangement constructed in accordance with the principles of the invention; and
Fig 12 is an expanded representation of Fig. 11B showing in greater detail additional internal features, such as fluid passageways.

### Detailed Description

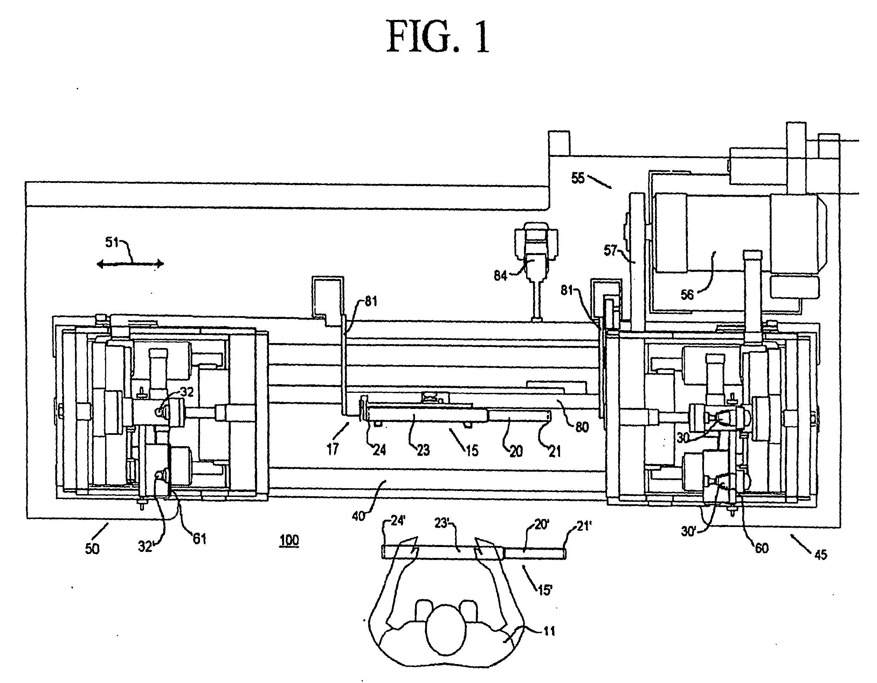

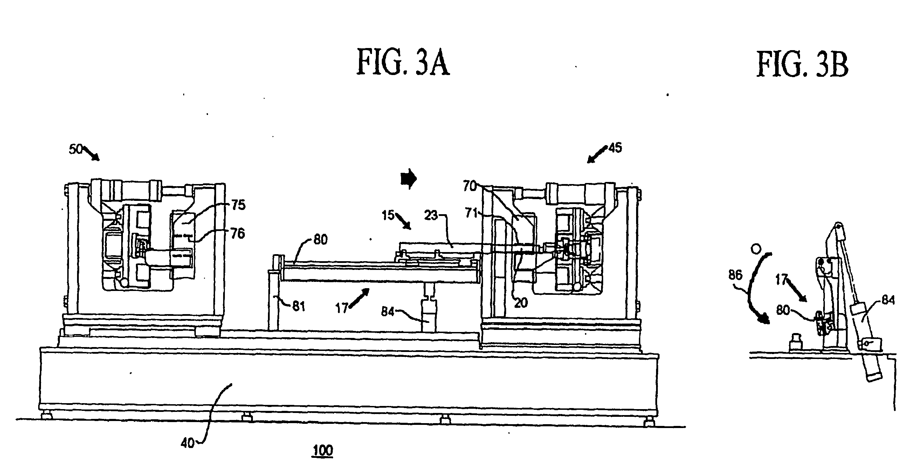

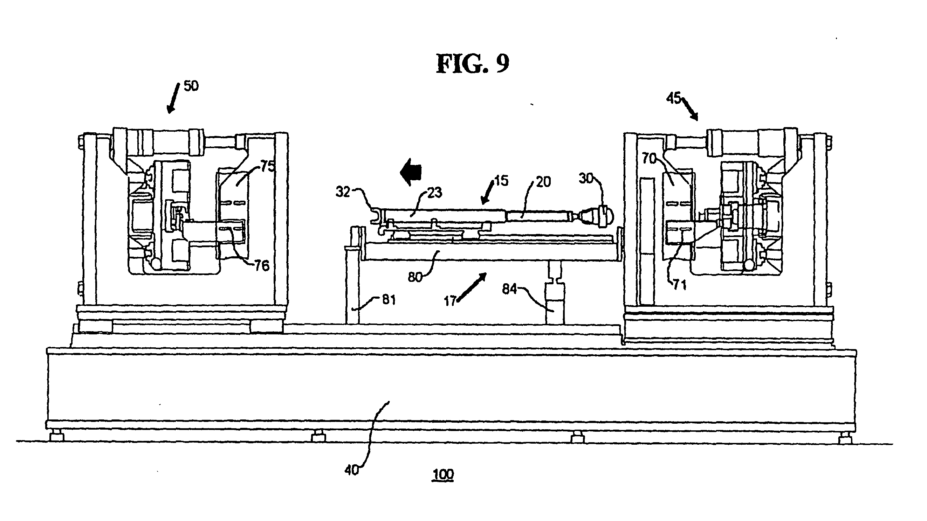

Fig. 1 is a simplified schematic representation of a synchronous welding system 100 constructed in accordance with the principles of the invention, as represented from above. As shown in this figure, a human operator 11 loads a drive shaft tube 15 onto a deployable drive shaft support that is designated generally as 17 that will be discussed in greater detail below in connection with Figs. 3B and 9. Human operator 11 may be replaced, in other embodiments of the invention, with a robotic delivery system (not shown). The human operator is shown in this figure to be holding a further drive shaft tube, designated herein as drive shaft tube 15'. Drive shaft tube 15' is in all respects substantially identical to drive shaft tube 15 that is shown to be already installed on deployable drive shaft support 17, and its corresponding portions are similarly designated, but with the addition of a prime (').

Drive shaft tube 15 is shown to have a first portion 20 having a first diameter determined at a first datum line 21. The drive shaft tube also has a second portion 23 having a second diameter determined at a second datum line 24. Datum lines 21 and 24 are used as the reference for most dimensions of the drive shaft tube during manufacture thereof. The end to be achieved in the processing to be effected by synchronous welding system 100 on drive shaft tube 15 is the installation by friction welding of a first end piece 30, which in this embodiment of the invention is a constant velocity joint, onto the end of first portion 20, and the installation of a second end piece 32, which in this embodiment of the invention is a portion of a universal joint, onto the end of second portion 23. Such installation of the first and second end pieces is to be performed simultaneously while, in this specific illustrative embodiment of the invention, all of the elements are supported on a common axis, to achieve high radial and axial alignment as described herein.

Synchronous welding system 100 is comprised of several major subsystems that include, in this specific illustrative embodiment of the invention, a base 40, a driven chuck assembly designated generally as 45, a translatable chuck assembly designated generally as 50. Driven chuck assembly 45 is installed on base 40 and has associated therewith a rotatory drive arrangement designated generally as 55. Rotatory drive arrangement 55 in this embodiment, has an electric motor 56 that is mechanically coupled to driven chuck assembly 45 by a drive belt 57 that transfers rotatory energy from electric motor 56 to driven chuck assembly 45. In this embodiment, a fixture in the form of a driven chuck assembly 45 and electric motor 56 maintain their position with respect to base 40 during all operations. However, translatable chuck assembly 50 is translatable in the direction of dual-head arrow 51 along base 40. Such translation of translatable chuck assembly 50 is effected by any known means, including pneumatic and/or hydraulic actuation (not shown). Finally, there is provided the aforementioned deployable drive shaft support 17, which as will be described is deployable to avoid interference with the translation of translatable chuck assembly 50.

Fig. 1 additionally shows that a further first end piece 30' and a further second end piece 32' are shown to be pre-loaded in receptacles 60 and 61 of the respective chuck assemblies 45 and 50. More specifically, in this specific illustrative embodiment of the invention, further first end piece 30' is pre-installed in receptacle 60 which, as will be described below, clamps onto further first end piece 30' and transports same to the location of first end piece 30 after first end piece 30 has been installed onto drive shaft tube 15. Similarly, further second end piece 32' is pre-installed in receptacle 61, and also clamps onto further second end piece 32' and transports same to the location of second end piece 32 after second end piece 32 has been installed onto drive shaft tube 15.

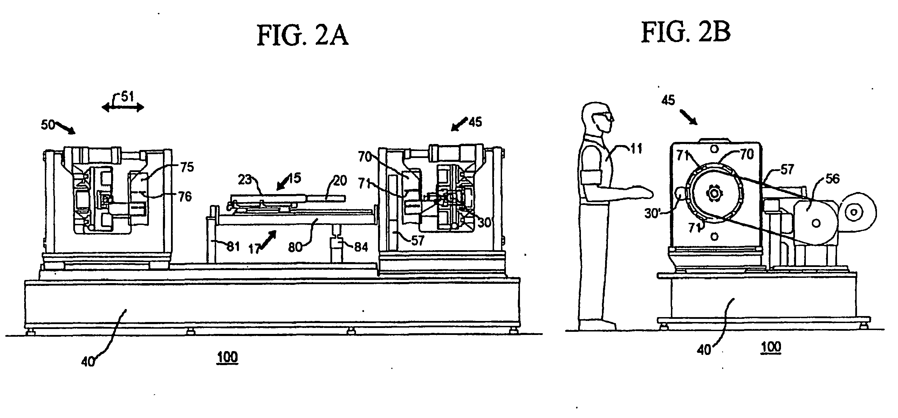

Fig. 2A is a simplified schematic front representation of synchronous welding system 100 of Fig. 1. Elements of structure that previously have been discussed are similarly designated. As shown in Fig. 2A, driven chuck assembly 45 has a chuck assembly 70 that is shown in this figure to have a plurality of chuck jaws 71 in an open condition. Similarly, translatable chuck assembly 50 has a chuck assembly 75 that is shown in this figure to have a plurality of chuck jaws 76 in an open condition.

The drive shaft tube is shown in this figure to be supported by deployable drive shaft support 17. The deployable drive shaft support is formed of a support platform 80 that is itself supported to be pivotable on hinged arms 81, pivotal deployment of deployable drive shaft support 17 being effected by actuation of an hydraulic cylinder 84.

Fig. 2B is a simplified schematic side representation of the synchronous welding system of Fig. 2A, and shows the rotatory coupling between electric motor 56 and chuck assembly 70 via drive belt 57. In this figure, chuck assembly 70 is shown to have a plurality of chuck jaws 71 distributed circumferentially therearound. Also, an end representation of further first end piece 30' is shown in this figure to facilitate comprehension of its spatial relationship in the uninstalled position with respect to the rotating center of chuck assembly 70.

Fig. 3A is a simplified schematic front representation of the synchronous welding system of Fig. 1 showing drive shaft tube 15 having been translated to the right so as to be within chuck assembly 70. Elements of structure that previously have been discussed are similarly designated. Chuck jaws 71 are shown to be closed on first portion 20 of drive shaft tube 15. In the present specific illustrative embodiment of the invention, chuck assembly 70 may have over 12 chuck jaws 71. Accuracy of the clamping is achieved by a sequential closure of the chuck jaws. More specifically, in this specific illustrative embodiment of the invention, three chuck jaws (not specifically designated) are first closed on first portion 20 of drive shaft tube 15. The three jaws are controlled in their operation by a cam plate (not specifically identified) that ensures that the three chuck jaws maintain radial equality as they translate radially toward, and communicate with first portion 20 of drive shaft tube 15. Once the controlled three of chuck jaws 71 are closed against drive shaft tube 15, then the remaining chuck jaws are closed without disturbing the axial location of drive shaft tube 15 established during closure of the three cam-controlled chuck jaws. In one embodiment, chuck jaws 71 are hydraulically actuated, and sequential operation of the closure of the chuck jaws is effected by hydraulic pressure break-over that results from the hydraulic pressure build-up that results from the engagement of the three cam-controlled chuck jaws. That is, as the three cam-controlled chuck jaws communicate with first portion 20 of drive shaft tube 15, hydraulic pressure builds in the supply system (not shown). Upon reaching a predetermined hydraulic pressure that is of sufficient magnitude to ensure axially stable engagement of drive shaft tube 15, hydraulic fluid, illustratively by operation of a pressure-responsive valve (not shown) is diverted to actuate selective ones or all of the remaining chuck jaws.

Fig. 3B is a simplified schematic side representation of a portion of the deployable drive shaft support 17 portion of synchronous welding system 100 showing deployable drive shaft support 17 in a withdrawn position. As shown, in this specific illustrative embodiment of the invention, extension of hydraulic cylinder 84 causes support platform 80 to be pivoted in the direction of arrow 86. Such pivotal withdrawal of support platform 80 is required to prevent collision with translatable chuck assembly 50 when it is translated along base 40 as described below.

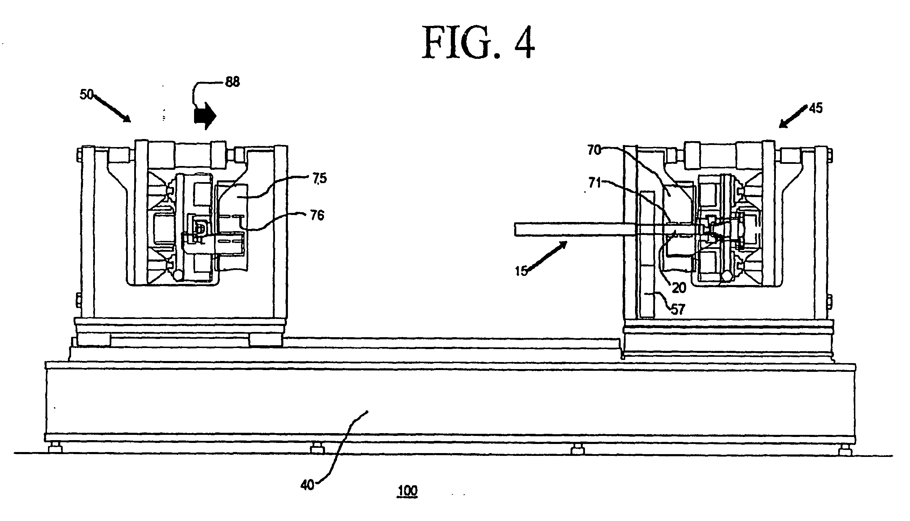

Fig. 4 is a simplified schematic front representation of synchronous welding system 100 wherein deployable drive shaft support 17 is in the condition of Fig. 3A. Elements of structure that previously have been discussed are similarly designated. Deployable drive shaft support 17 (not shown in this figure) has been withdrawn. As shown, chuck jaws 71 of chuck assembly 70 are shown in an engaged condition with first portion 20 of drive shaft tube 15. Translatable chuck assembly 50, however, is shown to have chuck jaws 76 of chuck assembly 75 to be in the open condition. Translatable chuck assembly 50 is therefore ready to be translated leftward, in the direction of arrow 88.

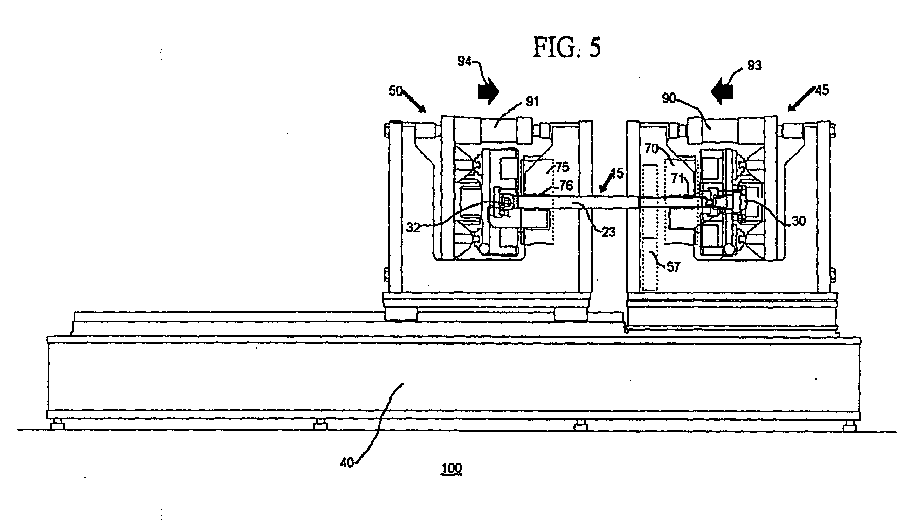

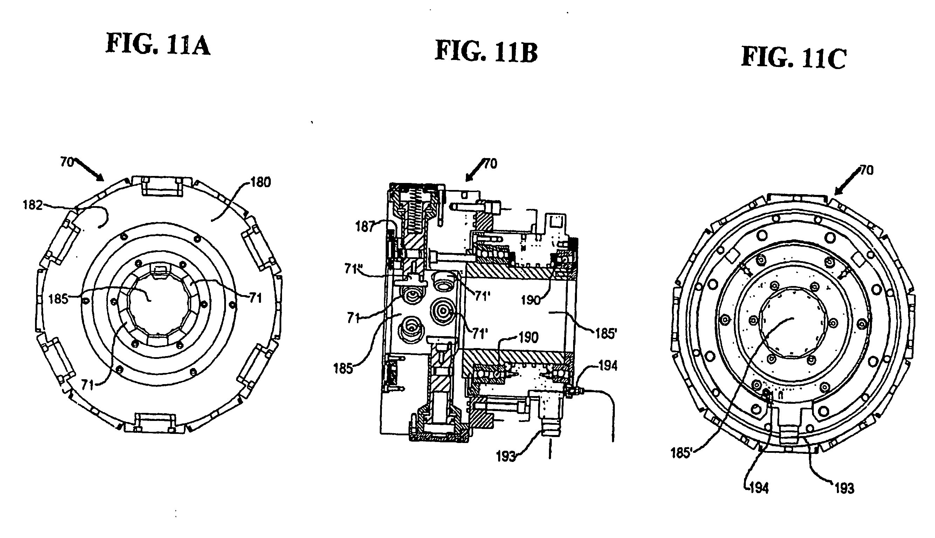

Fig. 5 is a simplified schematic front representation of synchronous welding system 100 wherein translatable chuck assembly 50 has been translated leftward, and chuck jaws 76 of chuck assembly 75 are closed to communicate with second portion 23 of drive shaft tube 15. In this specific illustrative embodiment of the invention, the closure of chuck jaws 76 is effected in accordance with the procedure described hereinabove in connection with the closure of chuck jaws 71 of chuck assembly 70. More specifically, three chuck jaws (not specifically designated) are first closed on first portion 23 of drive shaft tube 15. The three jaws are controlled in their operation by a cam plate (not specifically identified in this figure) that ensures that the three chuck jaws maintain radial equality as they translate radially toward, and communicate with first portion 23 of drive shaft tube 15. The cam plate is shown cross-sectionally in Fig. 11B. Once the controlled three of chuck jaws 76 are closed against drive shaft tube 15, then the remaining chuck jaws are closed without disturbing the axial location of drive shaft tube 15 established during closure of the three cam-controlled chuck jaws. As previously described, the chuck jaws are hydraulically actuated, and sequential operation of the closure of the chuck jaws is effected by hydraulic pressure break-over that results from the hydraulic pressure build-up that results from the engagement of the three cam-controlled chuck jaws.

As shown in Fig. 5, chuck jaws 71 and chuck jaws 76 being engaged with drive shaft tube 15 permits the rotatory motion that is applied to chuck assembly 70 by operation of electric motor 56 (not shown in this figure) and drive belt 57 to transmit via drive shaft tube 15 to chuck assembly 75. Thus, chuck assembly 70, drive shaft tube 15, and chuck jaws 76 rotate as a unit. Once drive shaft tube 15 is rotated, hydraulic actuators 90 and 91 are shown to be drawn in so as to urge first end piece 30 and second end piece 32 axially in the directions of respective arrows 93 and 94. However, first end piece 30 and second end piece 32 are clamped so as not to be rotatable. Thus, when the non-rotatable end pieces are urged into communication with rotating drive shaft tube 15, the friction causes a heat sufficient to effect welding to be generated. During the frictional heating, first end piece 30, drive shaft tube 15, and second end piece 32 are maintained in precise axial alignment.

In accordance with the invention, the force applied in the directions of respective arrows 93 and 94 is not necessarily constant, and may be applied in stages. More specifically, in one specific illustrative embodiment of the invention, there is provided a first force stage where the end pieces are each merely scuffed against the rotating drive shaft tube 15 in order to square-off the mating surfaces. In a practical embodiment of the invention, this first stage, which may be termed a "scrub" stage, has a duration of approximately one (1) second. The axial force applied during this first stage may be on the order of several hundred pounds, where a pound force is approximately 4·5N. Then, in a second stage, additional axial force is applied to effect the heating to a level adequate to achieve welding. This second stage, which may be termed a "heating" stage, may in one embodiment have a duration of approximately two (2) seconds. The axial force applied during this second stage may be approximately between four hundred and two thousand 1·8 *-* 8·9 KN (400-2000 pounds).

In highly advantageous embodiment of the invention, the temperature during heat phase is monitored with commercially available equipment to insure that the weld temperature of each end of the tube and their respective yokes is correct to obtain a proper weld. Proper temperature is obtained, in a practical embodiment, by modulating the magnitude of the weld force between the tube ends and their respective yokes while rotating the tube at a fixed preselected speed. This method allows components of different diameters at each end to be welded successfully. It is to be noted that different diameters will have different surface speeds, and since the heat generated is a function of surface speed and the applicable coefficient of friction, the variation in the applied force will make up for the difference in the surface speed of each end of the tube. The coefficient of friction, of course, is constant for the same material, *i.e.,* at both ends of same tube.

Finally, in a third stage a forging axial force is applied simultaneously to first end piece 3 0 and second end piece 32. The third stage may, in one embodiment of the invention have a duration of approximately three and one-half (3.5) seconds. The axial force applied during this third stage may be approximately 26.7 KN (approximately six thousand (6000) pounds). As stated, precise axial alignment is maintained between the components, ultimately resulting in an axially true drive shaft.

It is therefore seen that three methods of accomplishing both welds at one time are disclosed for this invention. The first is an open loop system where the thermal and force characteristics of the weld are only recorded and verified. This verification data is compared against predetermined acceptable weld criteria. The data may be derived from thermal sensors and pressure transducers (not shown). In addition, a linear displacement transducer may, in certain embodiments, be employed to ascertain the extent to which the axial dimension of the drive shaft is affected by the welding process. The second method involves monitoring of the distance per stage. The third and preferred method is the closed loop control of burn off, heat up, and forge force. This is accomplished in some embodiments from the feedback obtained from a thermal probe (not shown) that produces a data signal that may be applied against a predetermined weld temperature set point and acted upon by a system controller (not shown). The feedback pressure sensor is correlated to the forge force applied in the referenced third stage of the friction weld. In this closed loop method, the forge force is the primary control loop in the final stage of the friction weld. The force on the servo rams is the inner, cascaded control loop in the burn off (first stage) and heat up (second stage) portions of the weld process. The finished length, as measured by a linear gauge (not shown) is verified, but is not a primary control parameter.

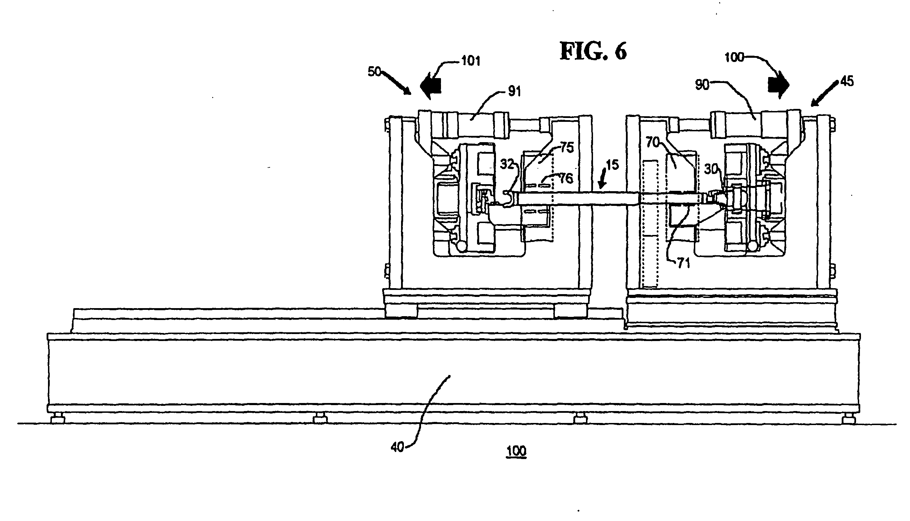

Fig. 6 is a simplified schematic front representation of synchronous welding system 100 in the condition of releasing of the axial force (in the direction of the arrows 100 and 101) arrangement with the drive shaft and the driven chuck in a disengaged condition. Elements of structure that previously have been discussed are similarly designated.

As shown in Fig. 6; hydraulic actuators 90 and 91 are in extended position, whereby the axial forging force on drive shaft tube 15 exerted via first end piece 30 and second end piece 32 has been released. In addition, chuck jaws 76 of chuck assembly 75 are opened, and therefore translatable chuck assembly 50 is now ready to be translated in the direction of arrow 101.

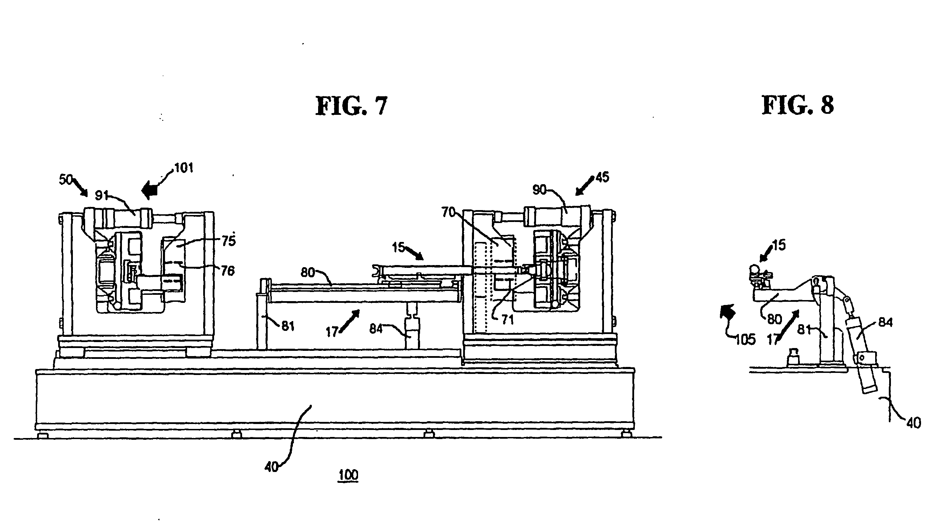

Fig. 7 is a simplified schematic front representation of synchronous welding system 100 with translatable chuck assembly 50 having been restored to the left, and thereby is disengaged from drive shaft tube 15, which now forms a portion of a completed drive shaft. Elements of structure that previously have been discussed are similarly designated. In this figure, deployable drive shaft support 17 is shown in the deployed condition ready to accept drive shaft tube 15 with first end piece 30 and second end piece 32 installed thereon.

Fig. 8 is a simplified schematic side representation of deployable drive shaft support 17 in a deployed position for supporting drive shaft tube 15. As shown, hydraulic cylinder 84 is in a withdrawn condition, whereby support platform 80 is raised in the direction of arrow 105.

Referring once again to Fig. 7, chuck jaws 71 of chuck assembly 70 are in the open condition. Thus drive shaft tube 15 with first end piece 30 can be axially removed from chuck assembly 70.

Fig. 9 is a simplified schematic front representation of synchronous welding system 100 with drive shaft tube 15 with first end piece 30 and second end piece 32 installed thereon fully disengaged from driven chuck assembly 45 and translatable chuck assembly 50, and supported by deployable drive shaft support 17. At this stage, the completed drive shaft can be removed from deployable drive shaft support 17 and replaced by drive shaft tube 15', illustratively by human operator 11 in Fig. 1, to commence welding of another drive shaft using drive shaft tube 15', further first end piece 30', and further second end piece 32'.

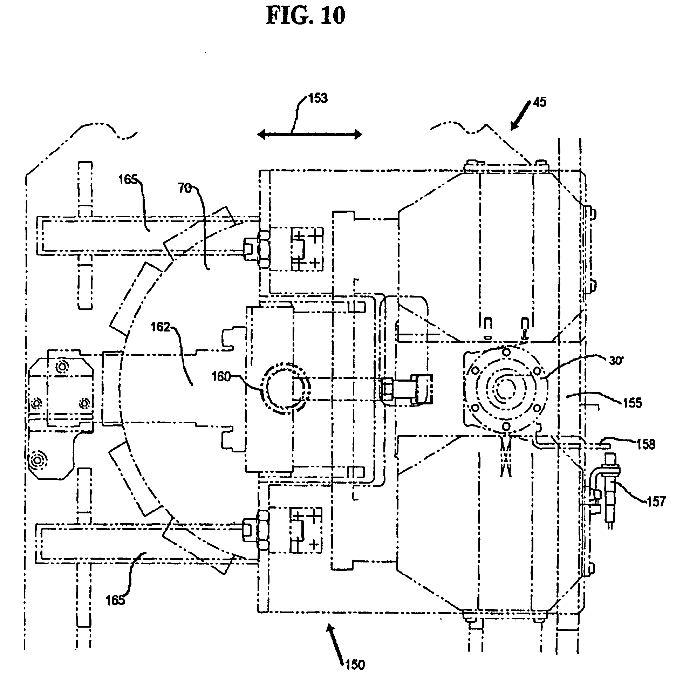

Fig. 10 is a simplified schematic phantom representation of driven chuck assembly 45. Elements of structure that previously have been discussed are similarly designated. As shown in this figure, chuck assembly 70 is located as a subassembly of driven chuck assembly 45, and there is additionally provided an end piece carrier that is generally designated as 150. The end piece carrier is translatable in the directions of two-headed arrow 153. End piece carrier 150 is shown to have a receptacle 155 in which is deposited further first end piece 30' in anticipation of it being installed on further drive shaft tube 15' (not shown in this figure) of Fig. 1.

Human operator 11, or a robotic arrangement (not shown), installs further first end piece 30' into receptacle 155. Upon completion of the prior drive shaft formed of first end piece 30, drive shaft tube 15, and second end piece 32, the completed drive shaft is removed from deployable drive shaft support 17 by human operator 11, and further drive shaft tube 15' is installed thereon by the human operator. End piece carrier 150 is translated toward the left whereby further first end piece 30' is caused to be installed in a first central clamping station 160. Such translation is effected by actuation of hydraulic actuator 162, which urges end piece carrier 150 along tracks 165. First central clamping station 160 maintains the relocated further first end piece 30' in a clamped so as to be non-rotatable and axially co-located with further drive shaft tube 15' (not shown in this figure) during the friction welding process, which proceeds as described hereinabove with respect to the welding of first end piece 30 and drive shaft tube 15.

In controlling the operation of the translation of end piece carrier 150, its location is determined by a sensor 157 that is of the proximity type. Sensor 157 issues an electrical signal responsive to the proximity of sensor arm 158.

Figs. 11A, 11B, and 11C are respective simplified schematic front, cross-sectional side, and back representations of chuck assembly 70. Elements of structure that previously have been discussed are similarly designated. As shown in Fig. 11A, chuck assembly 70 is provided with a housing 180 having a substantially planar forward surface 182 having a central aperture 185 therethrough. Radially inward of central aperture 185 are a plurality of chuck jaws 71. Twelve such chuck jaws are shown in this figure, and it can be seen in Fig. 11B that more than one row of jaws are employed in this specific illustrative embodiment of the invention. Chuck jaws that are located proximal to cam plate 187 are designated as chuck jaws 71, and those that are disposed axially inward are designated chuck jaws 71'. Cam plate 187 controls the rate of actuation and the centralization of three of chuck jaws 71, one of which is controlled chuck jaw 71". The two other controlled chuck jaws are not shown in this cross-sectional representation. The operation of cam plate 187 has been described hereinabove in connection with Fig. 5.

Chuck assembly 70 is, as previously stated, rotatable in response to electric motor 56 (not shown in this figure) and drive belt 57 (not shown in this figure). The chuck assembly is rotated on bearings 190, shown in Fig. 11B.

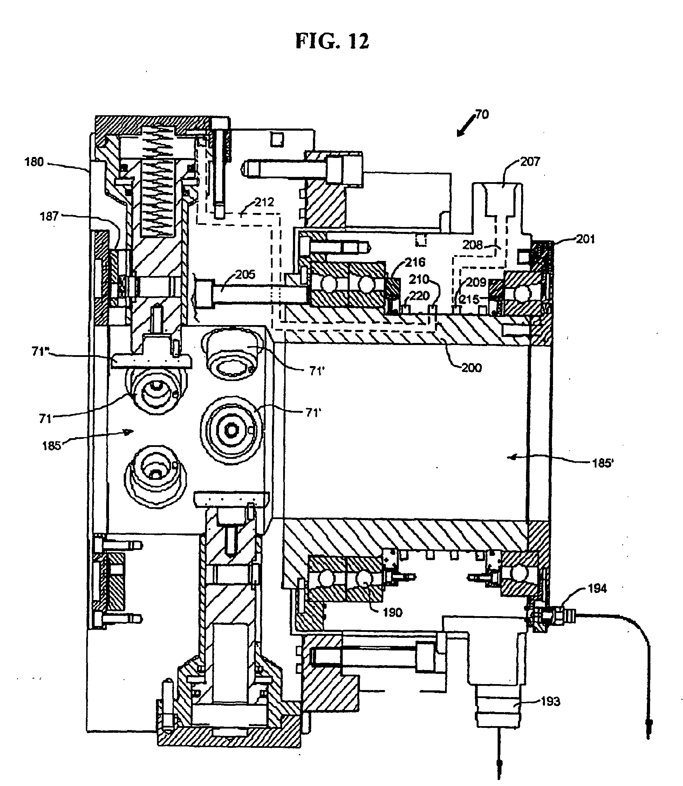

Fig. 11C is a representation of chuck assembly 70 from the back. Central aperture 185 is designated from this direction as 185'. Figs. 11B and 11C show drain port 193 and drain line 194 through which hydraulic oil is discharged. These elements will be described in greater detail in connection with Fig. 12.

Fig 12 is an enlarged representation of chuck assembly 70, as shown in Fig. 11B, further showing in greater detail additional internal features. Elements of structure that previously have been discussed are similarly designated. As shown in Fig. 12, chuck assembly 70 is provided with a rotatable housing 200 and a non-rotating housing 201. The rotating and non-rotating housings are shown on opposite sides of bearings 190. Rotatable housing 200 is coupled to housing 180 by a fastener 205. Thus, housing 180 is also rotatable.

Non-rotating housing 201 has a stationary fluid inlet port 207 that, in this specific illustrative embodiment of the invention, receives pressurized fluid (not shown) from a source (not shown). The pressurized fluid received at stationary fluid inlet port 207 is delivered via an internal channel 208 to an unclamping supply port 209 for effecting unclamping of chuck jaws 71. Pressurized fluid for clamping of the chuck jaws is received at a clamping fluid inlet port 210 that is connected by a channel 212 (shown in phantom) to chuck jaws 71". Further fluid channels (not shown) are provided to supply pressurized fluid for clamping and unclamping to the other chuck jaws.

As can be seen, unclamping supply port 209 and clamping fluid inlet port 210 are but labyrinth grooves in non-rotating housing 201 at the interface of rotatable housing 200. In a practical embodiment of the invention, there is provided between the non-rotating and rotatable housings a clearance of approximately 0.06 mm (approximately 0.002). End seals 215 and 216 limit leakage to the bearings of the fluid that bypasses internal drain port 220. In this specific illustrative embodiment of the invention, two such drain ports are provided. Fluid that is bypassed via the bearings is expelled at drain line 194, and the remaining fluid is expelled at external port 193.

Although the invention has been described in terms of specific embodiments and applications, persons skilled in the art can, in light of this teaching, generate additional embodiments without exceeding the scope of the claims.

## Claims

1. An arrangement for welding first and second shaft termination elements (30,32) at respective first and second ends of a cylindrical shaft (15), and in alignment with a predetermined axis, the arrangement comprising:
a shaft receiver (17) for receiving the cylindrical shaft (15);
a first chuck assembly (70) having a plurality of gripping elements (71,71') for gripping the cylindrical shaft at the first end thereof and maintaining the cylindrical shaft (15) in alignment with the predetermined axis;
a second chuck assembly (75) having a plurality of gripping elements (76) for gripping the cylindrical shaft (15) at the second end thereof in alignment with the predetermined axis;
a rotary drive (55) coupled to said first chuck assembly (70) for rotary motion of the first chuck assembly (70) with gripping elements (71,76);
a chuck assembly drive (50) for translating said second chuck assembly (75) between first and second axial positions;
a first shaft termination element receiver (60) for receiving the first shaft termination element (30) and axially translating same to a first installation position in alignment with the predetermined axis;
a first installation drive arrangement (90) for urging the first shaft termination element axially toward the cylindrical shaft as the cylindrical shaft is rotated in response to said rotary drive;
a second shaft termination element receiver (61) for receiving the second shaft termination element (32) and axially translating same to a second installation position in alignment with the predetermined axis; and
a second installation drive arrangement (91) for urging the second shaft termination element axially toward the cylindrical shaft as the cylindrical shaft is rotated in response to said rotary drive.

2. The arrangement of claim 1, further comprising a shaft receiver drive arrangement (80,84) for translating said shaft receiver (17) between a first,shaft receiver position where the cylindrical shaft (15) is supported by said shaft receiver (17) at a transaxial location that is substantially in axial alignment with said first chuck assembly (70), and a second shaft receiver position distal from the first shaft receiver position.

3. The arrangement of claim 1, wherein the shaft receiver (17) permits axial displacement of the cylindrical shaft (15) with respect to said shaft receiver.

4. The arrangement of claim 1, wherein said chuck assembly drive (50) comprises a pneumatic drive.

5. The arrangement of claim 1, wherein said rotary drive is operable to cause said first chuck assembly (70) to rotate at approximately between 500 to 6000 rpm.

6. The arrangement of claim 1, wherein said plurality of gripping elements of said first chuck assembly (70) comprises first and second sets of jaws (71,71').

7. The arrangement of claim 6, wherein said first set of jaws (71) is arranged to communicate with the cylindrical shaft (15) prior to said second set of jaws (71').

8. The arrangement of claim 7, wherein said first set of jaws (71) comprises a precision alignment arrangement for locking the cylindrical shaft (15) at a predetermined axial location.

9. The arrangement of claim 8, wherein said precision alignment arrangement comprises a plurality of angulated guideways associated with respective jaws of said first set of jaws (71), said angulated guideways having a precise angular orientation with respect to one another.

10. The arrangement of claim 9, wherein said plurality of angulated guideways are equiangularly distributed about the predetermined axis.

11. The arrangement of claim 8, wherein said second set of jaws (71') comprises a clamping arrangement for locking the cylindrical shaft at the predetermined axial location determined by said first set of jaws (71).

12. The arrangement of claim 11, wherein said first and second sets of jaws (70,71') are hydraulically actuated.

13. The arrangement of claim 12, wherein said second set of jaws (71') are operated in response to a first hydraulic pressure applied to said first set of jaws (71) exceeding a predetermined break-over first hydraulic pressure value.

14. The arrangement of claim 13, wherein said break-over first hydraulic pressure has a magnitude sufficient to cause said first set of jaws (71) to lock the cylindrical shaft (15) at the predetermined axial location.

15. The amangement of claim 1, the first chuck assembly (70) parts (180, 200) of further comprising a non-rotatable housing (201) around which parts (180, 200) of said first chuck assembly (70) and gripping elements (71) are rotated by said rotary drive (55).

16. The arrangement of claim 15, wherein said first chuck assembly (70) further comprises a rotatable housing (200) and a fluid delivery arrangement (208,210,212) disposed at the interface of said non-rotatable and said rotatable housing (20, 200).

17. The arrangement of claim 16, wherein said fluid delivery arrangement comprises:
a first fluid channel system (210,212) for supplying pressurized fluid for causing said first chuck assembly to grip the cylindrical shaft; and
a second fluid channel system (208) for supplying pressurized fluid for causing said first chuck assembly to release the cylindrical shaft.

18. The arrangement of claim 17, wherein said first fluid channel system comprises a first fluid passageway (210) at the interface of said non-rotatable and rotatable housings (200,201).

19. The arrangement of claim 17, wherein said second fluid channel system comprises a first fluid passageway (208) at the interface of said non-rotatable and said rotatable housings (200,201).

20. The arrangement of claim 17, wherein there is further provided a pressurized fluid supply port (207) installed on said non-rotatable housing (201).

21. The arrangement of claim 17, wherein there is further provided a fluid drain port (220) installed on said non-rotatable housing (201).

22. The arrangement of claim 16, wherein there is further provided a bearing arrangement (190) interposed between said non-rotatable and said rotatable housings (200,201).

23. The arrangement of claim 22, wherein there is further provided a fluid seal (215,216) for limiting flow of a pressurized fluid through the bearing arrangement.

24. The arrangement of claim 1, wherein said first and second installation drive arrangements (90,91) are operable to urge said first and second shaft termination elements (30,32), respectively, axially toward the cylindrical shaft (15) as, in use, the cylindrical shaft (15) is rotated by said rotary drive (55), by applying respective first and second axial forces in respective axially opposing directions, the respective first and second axial forces each being exerted at respective magnitudes of axial force for respective determined periods of time.

25. The arrangement of claim 24, wherein said first and second installation drive arrangements (90,91) are operable such that the first and second axial forces are applied at a plurality of magnitudes of axial force for respective predetermined sequential periods of time.

26. The arrangement of claim 25, further comprising a sensor and sensor arm (157,158) for measuring the distance of axial displacement resulting from the application of the respective first and second axial forces, said first and second installation drive arrangements (90,91) being operable to respectively apply said first and second axial forces in response to distance measurements provided by said distance measuring arrangement.

27. The arrangement of claim 25, further comprising temperature monitoring equipment for monitoring the weld temperature at each end of the cylindrical shaft (15), wherein said first and second installation drive arrangements (90,91) are operable to apply said first and second axial forces in response to temperatures monitored by said temperature monitoring equipment.

28. The arrangement of claim 27, wherein the first and second drive installation arrangements (90,91) are arranged to control said temperatures by modulating said first and second axial forces.

29. The arrangement of claim 28, wherein said rotary drive (55) is operable to rotate at a fixed preselected speed.

30. The arrangement of claim 27, wherein said rotary drive (55) is operable to rotate at a speed determined in response to the diameter of the cylindrical shaft (15) that is to be welded.

31. The arrangement of claim 27, wherein the rotary drive (55) is operable to rotate the cylindrical shaft (15) at a speed that achieves a predetermined rotational surface speed of the cylindrical shaft.

32. The arrangement of claim 25, wherein said first and second installation drive arrangements (90,91) are operable such that the respective predetermined sequential periods of time correspond to engagement phases of an installation of a first shaft termination element (30)

33. The arrangement of claim 32, wherein the engagement phases of the installation of the first shaft termination element (30) comprise a heating phase and a forging phase.

34. The arrangement of claim 33, wherein said first installation drive arrangement (90) is operable to apply approximately between 1.1 to 13.2 KN (250 to 3000 pounds) of axial force for a duration of approximately between 1.5 and 10 seconds during the heating phase, and to apply approximately between 11.1 to 53.4 KN (1500 to 12000 pounds) of axial force for a duration of approximately between 1 and 15 seconds during the forging phase.

35. The arrangement of claim 33, wherein said first installation arrangement (90) is operable to provide the further phase of scrubbing the first shaft termination element (30) against the first end of the cylindrical shaft (15) prior to performing the heating and forging phases.

36. The arrangement of claim 35, wherein said first installation drive arrangement (90) is operable to apply approximately between 0.6 to 1.5 KN (50 to 350 pounds) of axial force for a duration of approximately between 0.5 and 10 seconds during the further phase of scrubbing.

37. The arrangement of claim 35, wherein the further phase of scrubbing the first shaft termination element against the first end of the cylindrical shaft causes a change in the overall length of the cylindrical shaft and the installed terminations.

38. A method of welding first and second shaft termination elements (30,32) at respective first and second ends of a cylindrical shaft (14), and in alignment with a predetermined axis, the method comprising the steps of:
loading a cylindrical shaft (15) having first and second ends onto a shaft receiver (17) located at a proximal location, whereby the cylindrical shaft is supported so that its longitudinal axis is substantially coaxial with the predetermined axis;
loading the first shaft termination element (30) onto a first shaft termination element receiver (60);
loading the second shaft termination element (32), onto a second shaft termination element receiver (61);
translating the first shaft termination element receiver (60) whereby a principal axis of the first shaft termination element (30) is disposed coaxially with the predetermined axis;
translating the second shaft termination element receiver (61) whereby a principal axis of the second shaft termination element (32) is disposed coaxially with the predetermined axis;
axially urging the cylindrical shaft (15) toward the first shaft termination element (30) and through a first chuck assembly (70);
actuating the jaws (70,71) of the first chuck assembly whereby the cylindrical shaft (15) is clamped in the region of the first end thereof to a transaxial location where the longitudinal axis of the cylindrical shaft is coaxial with the predetermined axis;
axially translating the second shaft termination element (32) and a second chuck assembly (75) to a predetermined axial location in the region of the second end of the cylindrical shaft;
actuating the jaws (76) of a second chuck assembly (75) whereby the cylindrical shaft is clamped in the region of the second end thereof to a transaxial location where the longitudinal axis of the cylindrical shaft is coaxial with the predetermined axis;
rotating the first chuck assembly (70) at a predetermined rate of rotation;
urging the first shaft termination element (30) axially into communication with the first end of the cylindrical shaft; and
urging the second shaft termination element (32) axially into communication with the second end of the cylindrical shaft.

39. The method of claim 38, wherein, prior to performing said step of axially translating there is further provided the step of withdrawing the shaft receiver (17) to a distal location.

40. The method of claim 38, wherein there are further provided the steps of:
releasing a first axial force applied to the first shaft termination element (30) in response to said step of first urging;
releasing a second axial force applied to the second shaft termination element (32) in response to said step of second urging;
releasing the jaws of the second chuck assembly (75); and
withdrawing axially the second chuck assembly (75) to a distal axial location.

41. The method of claim 40, wherein there are further provided the steps of:
restoring the shaft receiver (17) to the proximal location;
releasing the jaws of the first chuck assembly (70); and
reverse axially urging the cylindrical shaft (15) out of the first chuck assembly (70), whereby the cylindrical shaft is supported by the shaft receiver.

42. The method of claim 38, wherein said step of actuating the jaws (71) of the first chuck assembly (70) comprises the further steps of:
first subset actuating the first subset of jaws (71);
controlling the performance of said step of first subset actuation to ensure all of the jaws in said first subset of jaws maintain an equal radial relationship during said step of first subset actuation with respect to the predetermined axis.

43. The method of claim 42, wherein said step of actuating the jaws (71) of the first chuck assembly (70) comprises the further step of second subset actuating a second subset of jaws (71), said step of second subset actuating being performed after said step of first subset actuating.

44. The method of claim 43, wherein said step of the jaws (71) of the first chuck assembly (70) actuating is performed in response to a step of applying an hydraulic pressure, and said step of second subset actuating is performed in response to the hydraulic pressure exceeding a predetermined hydraulic pressure magnitude.

## Patentansprüche

1. Anordnung zum Schweißen eines ersten und eines zweiten Wellenabschlusselements (30, 32) an einem jeweiligen ersten und zweiten Ende einer zylindrischen Welle (15) und in Ausrichtung mit einer vorbestimmten Achse, wobei die Anordnung umfasst:
eine Wellenaufnahmeeinheit (17) zum Aufnehmen der zylindrischen Welle (15)
eine erste Spannbackenanordnung (70) mit mehreren Spannelementen (71, 71') zum Spannen der zylindrischen Welle an dem ersten Ende davon und zum Halten der zylindrischen Welle (15) in Ausrichtung mit der vorbestimmten Achse;
eine zweite Spannbackenanordnung (75) mit mehreren Spannelementen (76) zum Spannen der zylindrischen Welle (15) an dem zweiten Ende davon in Ausrichtung mit der vorbestimmten Achse;
einen Drehantrieb (55), der mit der ersten Spann-backenanordnung (70) zur Drehbewegung der ersten Spannbackenanordnung (70) mit den Spannelementen (71, 76) verbunden ist;
einen Spannbackenanordnungsantrieb (50) zum Übersetzen der zweiten Spannbackenanordnung (75) zwischen einer ersten und zweiten axialen Position;
eine erste Wellenabschlusselement-Aufnahmeeinheit (60) zum Aufnehmen des ersten Wellenabschlusselements (30) und zum axialen Übersetzen desselben zu einer ersten Installationsposition in Ausrichtung mit der vorbestimmten Achse;
eine erste Installationsantriebsanordnung (90) zum axialen Treiben des ersten Wellenabschlusselements zu der zylindrischen Welle, wenn die zylindrische Welle in Antwort auf den Drehantrieb gedreht wird;
eine zweite Wellenabschlusselement-Aufnahmeeinheit (61) zum Aufnehmen des zweiten Wellenabschlusselements (32) und axiales Übersetzen desselben zu einer zweiten Installationsposition in Ausrichtung mit der vorbestimmten Achse; und
eine zweite Installationsantriebsanordnung (91) zum axialen Treiben des zweiten Wellenabschlusselements zu der zylindrischen Welle, wenn die zylindrische Welle in Antwort auf den Drehantrieb gedreht wird.

2. Anordnung nach Anspruch 1, ferner umfassend eine Wellenaufnahmeeinheits-Antriebsanordnung (80, 84) zum Übersetzen der Wellenaufnahmeeinheit (17) zwischen einer ersten Position der Wellenaufnahmeeinheit, an der die zylindrische Welle (15) an einer transversalaxialen Position, die im Wesentlichen mit der ersten Spannbackenanordnung (70) axial ausgerichtet ist, von der Wellenaufnahmeeinheit (17) gestützt wird, und einer zweiten Position der Wellenaufnahmeeinheit, die von der ersten Position der Wellenaufnahmeeinheit entfernt liegt.

3. Anordnung nach Anspruch 1, wobei die Wellenaufnahmeeinheit (17) eine axiale Verlagerung der zylindrischen Welle (15) bezüglich der Wellenaufnahmeeinheit ermöglicht.

4. Anordnung nach Anspruch 1, wobei der Spannbackenanordnungsantrieb (50) einen pneumatischen Antrieb umfasst.

5. Anordnung nach Anspruch 1, wobei der Drehantrieb betriebsfähig ist, um zu bewirken, dass sich die erste Spannbackenanordnung (70) bei etwa 500 bis 6.000 U/min dreht.

6. Anordnung nach Anspruch 1, wobei die mehreren Spannelemente der ersten Spannbackenanordnung (70) einen ersten und zweiten Satz Spannbacken (71, 71') umfasst.

7. Anordnung nach Anspruch 6, wobei der erste Satz Spannbacken (71) derart angeordnet ist, dass er mit der zylindrischen Welle (15) vor dem zweiten Satz Spannbacken (71') verbunden ist.

8. Anordnung nach Anspruch 7, wobei der erste Satz Spannbacken (71) an einer vorbestimmten axialen Position eine Präzisionsausrichtungsanordnung zum Verriegeln der zylindrischen Welle (15) umfasst.

9. Anordnung nach Anspruch 8, wobei die Präzisionsausrichtungsanordnung mehrere schiefe Führungsbahnen umfasst, die mit jeweiligen Spannbacken des ersten Satzes Spannbacken (71) in Verbindung stehen, wobei die gewinkelten Führungsbahnen zueinander eine präzise Winkelausrichtung aufweisen.

10. Anordnung nach Anspruch 9, wobei die mehreren gewinkelten Führungsbahnen gleichwinklig um die vorbestimmte Achse verteilt sind.

11. Anordnung nach Anspruch 8, wobei der zweite Satz Spannbacken (71') eine Klemmanordnung zum Verriegeln der zylindrischen Welle an der vorbestimmten axialen Position umfasst, die von dem ersten Satz Spannbacken (71) bestimmt wird.

12. Anordnung nach Anspruch 11, wobei der erste und der zweite Satz Spannbacken (70, 71') hydraulisch betätigt werden.

13. Anordnung nach Anspruch 12, wobei der zweite Satz Spannbacken (71') in Antwort auf einen ersten hydraulischen Druck betrieben wird, der auf den ersten Satz Spannbacken (71) angewendet wird und einen vorbestimmten ersten hydraulischen Durchbruchsdruckwert übertrifft.

14. Anordnung nach Anspruch 13, wobei der erste hydraulische Durchbruchsdruck eine ausreichende Größe aufweist, um zu bewirken, dass der erste Satz Spannbacken (71) die zylindrische Welle (15) an der vorbestimmten axialen Position verriegelt.

15. Anordnung nach Anspruch 1, wobei die erste Spannbackenanordnung (70) ferner ein nicht drehbares Gehäuse (201), um dessen Teile (180, 200) die erste Spannbackenanordnung und die Spannelemente (71) von dem Drehantrieb (55) gedreht werden.

16. Anordnung nach Anspruch 15, wobei die erste Spannbackenanordnung (70) ferner ein drehbares Gehäuse (200) und eine Fluidzuführanordnung (208, 210, 212) umfasst, die an der Schnittstelle des nicht drehbaren und des drehbaren Gehäuses (201, 200) angeordnet ist.

17. Anordnung nach Anspruch 16, wobei die Fluidzuführanordnung umfasst:
ein erstes Fluidkanalsystem (210, 212) zum Zuführen von Druckfluid, um zu bewirken, dass die erste Spannbackenanordnung die zylindrische Welle spannt; und
ein zweites Fluidkanalsystem (208) zum Zuführen von Druckfluid, um zu bewirken, dass die erste Spannbackenanordnung die zylindrische Welle freigibt.

18. Anordnung nach Anspruch 17, wobei das erste Fluidkanalsystem an der Schnittstelle des nicht drehbaren und des drehbaren Gehäuses (200, 201) einen ersten Fluiddurchgang (210) umfasst.

19. Anordnung nach Anspruch 17, wobei das zweite Fluidkanalsystem an der Schnittstelle des nicht drehbaren und des drehbaren Gehäuses (200, 201) einen ersten Fluiddurchgang (208) umfasst.

20. Anordnung nach Anspruch 17, wobei ferner eine Druckfluid-Zuführöffnung (207) bereitgestellt wird, die auf dem nicht drehbaren Gehäuse (201) installiert ist.

21. Anordnung nach Anspruch 17, wobei ferner eine Fluidabführöffnung (220) bereitgestellt wird, die an dem nicht drehbaren Gehäuse (201) installiert ist.

22. Anordnung nach Anspruch 16, wobei ferner eine Lageranordnung (190) zwischen dem nicht drehbaren und dem drehbaren Gehäuse (200, 201) angeordnet ist.

23. Anordnung nach Anspruch 22, wobei ferner eine Fluidabdichtung (215, 216) zum Begrenzen eines Druckfluids durch die Lageranordnung bereitgestellt wird.

24. Anordnung nach Anspruch 1, wobei die erste und die zweite Installationsantriebsanordnung (90, 91) betriebsfähig sind, um das erste und das zweite Wellenabschlusselement (30, 32) jeweils axial in Richtung der zylindrischen Welle (15) zu treiben, wenn die zylindrische Welle (15) bei der Benutzung von dem Drehantrieb (55) durch Anwenden von jeweils einer ersten und zweiten Axialkraft in axial entgegengesetzte Richtungen gedreht wird, wobei die erste und die zweite Axialkraft jeweils bei entsprechenden Axialkraftgrößen für jeweils bestimmte Zeiträume ausgeübt werden.

25. Anordnung nach Anspruch 24, wobei die erste und die zweite Installationsantriebsanordnung (90, 91) betriebsfähig sind, so dass die erste und die zweite Axialkraft bei mehreren Axialkraftgrößen für jeweils bestimmte, aufeinander folgende Zeiträume angewendet werden.

26. Anordnung nach Anspruch 25, ferner umfassend einen Sensor und Sensorarm (157, 158) zum Messen des Abstands der axialen Verlagerung, die sich aus der Anwendung der jeweils ersten und zweiten Axialkraft ergibt, wobei die erste und die zweite Installationsantriebsanordnung (90, 91) betriebsfähig sind, um jeweils die erste und die zweite Axialkraft gemäß den Abstandsmessungen anzuwenden, die von der Abstandsmessanordnung bereitgestellt werden.

27. Anordnung nach Anspruch 25, ferner umfassend eine Temperaturüberwachungsvorrichtung zum Überwachen der Schweißtemperatur an jedem Ende der zylindrischen Welle (15), wobei die erste und die zweite Installationsantriebsanordnung (90, 91) betriebsfähig sind, um die erste und die zweite Axialkraft gemäß den Temperaturen anzuwenden, die von der Temperaturüberwachungsvorrichtung überwacht werden.

28. Anordnung nach Anspruch 27, wobei die erste und die zweite Antriebsinstallationsanordnung (90, 91) angeordnet sind, um die Temperaturen durch Abstimmen der ersten und der zweiten Axialkraft zu steuern.

29. Anordnung nach Anspruch 28, wobei der Drehantrieb (55) betriebsfähig ist, um sich bei einer festgelegten, vorher ausgewählten Geschwindigkeit zu drehen.

30. Anordnung nach Anspruch 27, wobei der Drehantrieb (55) betriebsfähig ist, um sich bei einer Geschwindigkeit zu drehen, die gemäß dem Durchmesser der zu schweißenden, zylindrischen Welle (15) bestimmt wird.

31. Anordnung nach Anspruch 27, wobei der Drehantrieb (55) betriebsfähig ist, um die zylindrische Welle (15) bei einer Geschwindigkeit zu drehen, die eine vorbestimmte Drehflächengeschwindigkeit der zylindrischen Welle erreicht.

32. Anordnung nach Anspruch 25, wobei die erste und die zweite Installationsantriebsanordnung (90, 91) betriebsfähig sind, so dass die jeweils vorbestimmten, aufeinander folgenden Zeiträume den Eingriffsphasen einer Installation eines ersten Wellenabschlusselements (30) entsprechen.

33. Anordnung nach Anspruch 32, wobei die Eingriffsphasen der Installation des ersten Wellenabschlusselements (30) eine Erwärmungsphase und eine Schmiedephase umfassen.

34. Anordnung nach Anspruch 33, wobei die Installationsantriebsanordnung (90) betriebsfähig ist, um während der Erwärmungsphase für eine Dauer von zwischen etwa 1,5 und 10 Sekunden eine Axialkraft von zwischen etwa 1,1 bis 13,2 KN (250 bis 300 Pfund) auszuüben, und während der Schmiedephase für eine Dauer von zwischen etwa 1 und 15 Sekunden eine Axialkraft von etwa zwischen 11,1 bis 53,4 KN (1.500 bis 12.000 Pfund) auszuüben.

35. Anordnung nach Anspruch 33, wobei die erste Installationsanordnung (90) betriebsfähig ist, um die weitere Phase des Scheuerns des ersten Wellenabschlusselements (30) gegen das erste Ende der zylindrischen Welle (15) vor dem Ausführen der Erwärmungs- und Schmiedphase bereitzustellen.

36. Anordnung nach Anspruch 35, wobei die erste Installationsantriebsanordnung (90) betriebsfähig ist, um während der weiteren Phase des Scheuerns für eine Dauer von etwa zwischen 0,5 und 10 Sekunden eine Axialkraft von etwa zwischen 0,6 bis 1,5 KN (50 bis 350 Pfund) auszuüben.

37. Anordnung nach Anspruch 35, wobei die weitere Phase des Scheuerns des ersten Wellenabschlusselements gegen das erste Ende der zylindrischen Welle eine Veränderung in der Gesamtlänge der zylindrischen Welle und der installierten Abschlüsse bewirkt.

38. Verfahren zum Schweißen eines ersten und eines zweiten Wellenabschlusselements (30, 32) an einem jeweiligen ersten und zweiten Ende einer zylindrischen Welle (14) und in Ausrichtung mit einer vorbestimmten Achse, wobei das Verfahren die folgenden Schritte umfasst:
Laden einer zylindrischen Welle (15) mit einem ersten und zweiten Ende auf eine Wellenaufnahmeeinheit (17) an einer proximalen Position, wobei die zylindrische Welle derart gestützt ist, dass ihre Längsachse mit der vorbestimmten Achse im Wesentlichen koaxial ist;
Laden des ersten Wellenabschlusselements (30) auf eine erste Wellenabschlusselement-Aufnahmeeinheit (60); Laden des zweiten Wellenabschlusselements (32) auf eine zweite Wellenabschlusselement-Aufnahmeeinheit (61) ;
Übersetzen der ersten Wellenabschlusselement-Aufnahmeeinheit (60), wobei eine Hauptachse des ersten Wellenabschlusselements (30) mit der vorbestimmten Achse koaxial ausgerichtet wird;
Übersetzen der zweiten Wellenabschlusselement-Aufnahmeeinheit (61), wobei eine Hauptachse des zweiten Wellenabschlusselements (32) mit der vorbestimmten Achse koaxial ausgerichtet wird;
axiales Treiben der zylindrischen Welle (15) zu dem ersten Wellenabschlusselement (30) und durch eine erste Spannbackenanordnung (70);
Betätigen der Spannbacken (70, 71) der ersten Spannbackenanordnung, wobei die zylindrische Welle (15) in dem Bereich des ersten Endes davon an eine transversalaxiale Position geklemmt wird, an der die Längsachse der zylindrischen Welle mit der vorbestimmten Achse koaxial ist;
axiales Übersetzen des zweiten Wellenabschlusselements (32) und einer zweiten Spannbackenanordnung (75) zu einer vorbestimmten axialen Position in dem Bereich des zweiten Endes der zylindrischen Welle;
Betätigen der Spannbacken (76) der zweiten Spannbackenanordnung (75), wobei die zylindrische Welle in dem Bereich des zweiten Endes davon an eine transversalaxiale Position geklemmt wird, an der die Längsachse der zylindrischen Welle mit der vorbestimmten Achse koaxial ist;
Drehen der ersten Spannbackenanordnung (70) bei einer vorbestimmten Drehgeschwindigkeit;
axiales Treiben des ersten Wellenabschlusselements (30), so dass es mit dem ersten Ende der zylindrischen Welle in Verbindung steht; und
axiales Treiben des zweiten Wellenabschlusselements (32), so dass es mit dem zweiten Ende der zylindrischen Welle in Verbindung steht.

39. Verfahren nach Anspruch 38, wobei vor dem Ausführen des Schritts des axialen Übersetzens ferner der Schritt des Zurückziehens der Wellenaufnahmeeinheit (17) in eine distale Position bereitgestellt wird.

40. Verfahren nach Anspruch 38, wobei ferner die folgenden Schritte bereitgestellt werden:
Freigeben einer ersten Axialkraft, die auf das erste Wellenabschlusselement (30) in Antwort auf den Schritt des ersten Treibens angewendet wird;
Freigeben einer zweiten Axialkraft, die auf das zweite Wellenabschlusselement (32) in Antwort auf den Schritt des zweiten Treibens angewendet wird;
Freigeben der Spannbacken der zweiten Spannbackenanordnung (75); und
axiales Zurückziehen der zweiten Spannbackenanordnung (75) in eine distale Achsenposition.

41. Verfahren nach Anspruch 40, wobei ferner die folgenden Schritte bereitgestellt werden:
Zurückführen der ersten Wellenaufnahmeeinheit (17) in die proximale Position;
Freigeben der Spannbacken der ersten Spannbackenanordnung (70); und
umgekehrtes axiales Treiben der zylindrischen Welle (15) aus der ersten Spannbackenanordnung (70), wobei die zylindrische Welle durch die Wellenaufnahmeeinheit gestützt wird.

42. Verfahren nach Anspruch 38, wobei der Schritt des Betätigens der Spannbacken (71) der ersten Spannbackenanordnung (70) die folgenden Schritte umfasst:
Betätigen der ersten Untereinheit der Spannbacken (71);
Steuern der Ausführung des Schritts der ersten Betätigung der Untereinheit, um sicherzustellen, dass während des Schritts des ersten Betätigens der Untereinheit alle Spannbacken in der ersten Untereinheit der Spannbacken bezüglich der vorbestimmten Achse eine gleiche radiale Beziehung beibehalten.

43. Verfahren nach Anspruch 42, wobei der Schritt des Betätigens der Spannbacken (71) der ersten Spannbackenanordnung (70) den weiteren Schritt des zweiten Betätigens einer Untereinheit von Spannbacken (71) umfasst, wobei der Schritt des zweiten Betätigens der Untereinheit nach dem Schritt des ersten Betätigens der Untereinheit ausgeführt wird.

44. Verfahren nach Anspruch 43, wobei der Schritt des Betätigens der Spannbacken (71) der ersten Spannbackenanordnung (70) in Antwort auf einen Schritt des Anwendens eines hydraulischen Drucks ausgeführt wird, und wobei der Schritt des zweiten Betätigens der Untereinheit in Antwort auf den hydraulischen Druck ausgeführt wird, der eine vorbestimmte hydraulische Druckgröße überschreitet.

## Revendications

1. Agencement, permettant de souder des premier et deuxième éléments de terminaison d'arbre (30, 32) aux première et deuxième extrémités respectives d'un arbre cylindrique (15) et en alignement avec un axe prédéterminé, l'agencement comprenant :
un logement d'arbre (17), permettant de loger l'arbre cylindrique (15) ;
un premier ensemble de serrage (70), ayant une pluralité d'éléments de préhension (71, 71'), permettant de saisir l'arbre cylindrique à la première extrémité de celui-ci et de maintenir l'arbre cylindrique (15) en alignement avec l'axe prédéterminé ;
un deuxième ensemble de serrage (75), ayant une pluralité d'éléments de préhension (76), permettant de saisir l'arbre cylindrique (15) à la deuxième extrémité de celui-ci, en alignement avec l'axe prédéterminé ;
un entraînement rotatif (55), couplé audit premier ensemble de serrage (70) pour un mouvement rotatif du premier ensemble de serrage (70) avec les éléments de préhension (71, 76) ;
un entraînement de l'ensemble de serrage (50), permettant de transférer ledit deuxième ensemble de serrage (75) entre les première et deuxième positions axiales ;
un premier logement d'élément de terminaison d'arbre (60), permettant de loger le premier élément de terminaison d'arbre (30) et de transférer axialement celui-ci en une première position d'installation, en alignement avec l'axe prédéterminé ;
un premier agencement d'entraînement d'installation (90), permettant de pousser le premier élément de terminaison d'arbre axialement vers l'arbre cylindrique, lorsque l'arbre cylindrique est mis en rotation en réponse audit entraînement rotatif ;
un deuxième logement d'élément de terminaison d'arbre (61), permettant de loger le deuxième élément de terminaison d'arbre (32) et de transférer axialement celui-ci en une deuxième position d'installation, en alignement avec l'axe prédéterminé et
un deuxième agencement d'entraînement d'installation (91), permettant de pousser le deuxième élément de terminaison d'arbre axialement vers l'arbre cylindrique, lorsque l'arbre cylindrique est mis en rotation en réponse audit entraînement rotatif.

2. Agencement selon la revendication 1, comprenant en outre un agencement d'entraînement de logement d'arbre (80, 84), permettant de transférer ledit logement d'arbre (17) entre une première position du logement d'arbre, où l'arbre cylindrique (15) est supporté par ledit logement d'arbre (A) en un emplacement transaxial qui est sensiblement en alignement axial avec ledit premier ensemble de serrage (70) et une deuxième position du logement d'arbre, distale de la première position du logement d'arbre.

3. Agencement selon la revendication 1, dans lequel le logement d'arbre (17) permet un déplacement axial de l'arbre cylindrique (15) par rapport audit logement d'arbre.

4. Agencement selon la revendication 1, dans lequel ledit entraînement de l'ensemble de serrage (50) comprend un entraînement pneumatique.

5. Agencement selon la revendication 1, dans lequel ledit entraînement rotatif peut être actionné pour amener ledit premier ensemble de serrage (70) à tourner à environ 500 à 6000 rpm.

6. Agencement selon la revendication 1, dans lequel ladite pluralité d'éléments de préhension dudit premier ensemble de serrage (70) comprend des premier et deuxième jeux de mâchoires (71, 71').

7. Agencement selon la revendication 6, dans lequel ledit premier jeu de mâchoires (71) est agencé pour communiquer avec l'arbre cylindrique (15) avant ledit deuxième jeu de mâchoires (71').

8. Agencement selon la revendication 7, dans lequel ledit premier jeu de mâchoires (71) comprend un agencement d'alignement de précision, permettant de verrouiller l'arbre cylindrique (15) en un emplacement axial prédéterminé.

9. Agencement selon la revendication 8, dans lequel ledit agencement d'alignement de précision comprend une pluralité de glissières anguleuses, associées aux mâchoires respectives dudit premier jeu de mâchoires (71), lesdites glissières anguleuses ayant une orientation angulaire précise l'une par rapport à l'autre.

10. Agencement selon la revendication 9, dans lequel ladite pluralité de glissières anguleuses est répartie de manière équiangle autour de l'axe prédéterminé.

11. Agencement selon la revendication 8, dans lequel ledit deuxième jeu de mâchoires (71') comprend un agencement de blocage, permettant de verrouiller l'arbre cylindrique dans l'emplacement axial prédéterminé, déterminé par ledit premier jeu de mâchoires (71).

12. Agencement selon la revendication 11, dans lequel lesdits premier et deuxième jeux de mâchoires (70, 71') sont actionnés hydrauliquement.

13. Agencement selon la revendication 12, dans lequel ledit deuxième jeu de mâchoires (71') est actionné en réponse à une première pression hydraulique, appliquée audit premier jeu de mâchoires (71), qui excède une première valeur de pression hydraulique de départ prédéterminée.

14. Agencement selon la revendication 13, dans lequel ladite première pression hydraulique de départ a une ampleur suffisante pour amener ledit premier jeu de mâchoires (71) à verrouiller l'arbre cylindrique (15) dans l'emplacement axial prédéterminé.

15. Agencement selon la revendication 1, le premier ensemble de serrage (70) comprenant en outre un corps non rotatif (201), autour duquel des parties (180, 200) dudit premier ensemble de serrage (70) et des éléments de préhension (71) sont mis en rotation par ledit entraînement rotatif (55).

16. Agencement selon la revendication 15, dans lequel ledit premier ensemble de serrage (70) comprend en outre un corps rotatif (200) et un agencement de déversement de fluide (208, 210, 212), disposé à l'interface desdits corps non rotatif et rotatif (201, 200).

17. Agencement selon la revendication 16, dans lequel ledit agencement de déversement de fluide comprend :
un premier système de canaux de fluide (210, 212), permettant de délivrer du fluide sous pression pour amener ledit premier ensemble de serrage à saisir l'arbre cylindrique et
un deuxième système de canaux de fluide (208), permettant de délivrer du fluide sous pression pour amener ledit premier ensemble de serrage à relâcher l'arbre cylindrique.

18. Agencement selon la revendication 17, dans lequel ledit premier système de canaux de fluide comprend un premier passage de fluide (210) à l'interface desdits corps non rotatif et rotatif (201, 200).

19. Agencement selon la revendication 17, dans lequel ledit deuxième système de canaux de fluide comprend une premier passage de fluide (208) à l'interface desdits corps non rotatif et rotatif (201, 200).

20. Agencement selon la revendication 17, dans lequel il est prévu en outre un orifice d'alimentation en fluide sous pression (207), installé sur ledit corps non rotatif (201).

21. Agencement selon la revendication 17, dans lequel il est prévu en outre un orifice de fuite de fluide (220), installé sur ledit corps non rotatif (201).

22. Agencement selon la revendication 16, dans lequel il est prévu en outre un agencement de paliers (190), interposé entre lesdits corps non rotatif et rotatif (201, 200).

23. Agencement selon la revendication 22, dans lequel il est prévu en outre un dispositif d'étanchéité de fluide (215, 216), permettant de limiter l'écoulement d'un fluide sous pression dans l'agencement de paliers.

24. Agencement selon la revendication 1, dans lequel lesdits premier et deuxième agencements d'entraînement d'installation (90, 91) peuvent être actionnés pour pousser lesdits premier et deuxième éléments de terminaison d'arbre (30, 32), respectivement, axialement vers l'arbre cylindrique (15) lorsque, en cours d'utilisation, l'arbre cylindrique (15) est mis en rotation par ledit entraînement rotatif (55), en appliquant les première et deuxième forces axiales respectives dans les directions axialement opposées respectives, les première et deuxième forces axiales respectives étant exercées chacune suivant des ampleurs respectives de force axiale pour des laps de temps déterminés respectifs.

25. Agencement selon la revendication 24, dans lequel lesdits premier et deuxième agencements d'entraînement d'installation (90, 91) peuvent être actionnés, de sorte que les première et deuxième forces axiales sont appliquées suivant une pluralité d'ampleurs de force axiale pour des laps de temps séquentiels prédéterminés respectifs.

26. Agencement selon la revendication 25, comprenant en outre un détecteur et un bras de détecteur (157, 158), permettant de mesurer la distance du déplacement axial, résultant de l'application des première et deuxième forces axiales respectives, lesdits premier et deuxième agencements d'entraînement d'installation (90, 91) pouvant être actionnés pour appliquer respectivement lesdites première et deuxième forces axiales, en réponse aux mesures de distance, fournies par ledit agencement de mesure de distance.

27. Agencement selon la revendication 25, comprenant en outre un équipement de surveillance de température, permettant de surveiller la température de soudage à chaque extrémité de l'arbre cylindrique (15), dans lequel lesdits premier et deuxième agencements d'entraînement d'installation (90, 91) peuvent être actionnés pour appliquer lesdites première et deuxième forces axiales, en réponse aux températures, surveillées par ledit équipement de surveillance de température.

28. Agencement selon la revendication 27, dans lequel les premier et deuxième agencements d'entraînement d'installation (90, 91) sont agencés pour commander lesdites températures en modulant lesdites première et deuxième forces axiales.

29. Agencement selon la revendication 28, dans lequel ledit entraînement rotatif (55) peut être actionné pour tourner à une vitesse présélectionnée fixe.

30. Agencement selon la revendication 27, dans lequel ledit entraînement rotatif (55) peut être actionné pour tourner à une vitesse déterminée, en réponse au diamètre de l'arbre cylindrique (15) qui doit être soudé.

31. Agencement selon la revendication 27, dans lequel l'entraînement rotatif (55) peut être actionné pour faire tourner l'arbre cylindrique (15) à une vitesse qui atteint une vitesse de rotation en surface prédéterminée de l'arbre cylindrique.

32. Agencement selon la revendication 25, dans lequel lesdits premier et deuxième agencements d'entraînement d'installation (90, 91) peuvent être actionnés, de sorte que les laps de temps séquentiels prédéterminés respectifs correspondent aux phases de mise en prise d'une installation d'un premier élément de terminaison d'arbre (30).

33. Agencement selon la revendication 32, dans lequel les phases de mise en prise de l'installation du premier élément de terminaison d'arbre (30) comprennent une phase de chauffage et une phase de forgeage.

34. Agencement selon la revendication 33, dans lequel ledit premier agencement d'entraînement d'installation (90) peut être actionné pour appliquer une force axiale d'approximativement 1,1 à 13,2 KN (250 à 3000 livres) pour une durée d'approximativement 1,5 à 10 secondes durant la phase de chauffage et pour appliquer une force axiale d'approximativement 11,1 à 53,4 KN (1500 à 12000 livres) pour une durée d'approximativement 1 à 15 secondes durant la phase de forgeage.

35. Agencement selon la revendication 33, dans lequel ledit premier agencement d'installation (90) peut être actionné pour délivrer la phase supplémentaire de frottement du premier élément de terminaison d'arbre (30) contre la première extrémité de l'arbre cylindrique (15), avant d'exécuter les phases de chauffage et de forgeage.

36. Agencement selon la revendication 35, dans lequel ledit premier agencement d'entraînement d'installation (90) peut être actionné pour appliquer une force axiale d'approximativement 0,6 à 1,5 KN (50 à 350 livres) pour une durée d'approximativement 0,5 à 10 secondes durant la phase supplémentaire de frottement.

37. Agencement selon la revendication 35, dans lequel la phase supplémentaire de frottement du premier élément de terminaison d'arbre contre la première extrémité de l'arbre cylindrique amène un changement dans la longueur cumulée de l'arbre cylindrique et des terminaisons installées.

38. Procédé de soudage des premier et deuxième éléments de terminaison d'arbre (30, 32) aux première et deuxième extrémités respectives d'un arbre cylindrique (14) et en alignement avec un axe prédéterminé, le procédé comprenant les étapes consistant à :
charger un arbre cylindrique (15), ayant les première et deuxième extrémités sur un logement d'arbre (17) situées dans un emplacement proximal, moyennant quoi l'arbre cylindrique est supporté, de sorte que son axe longitudinal est sensiblement coaxial par rapport à l'axe prédéterminé ;
charger le premier élément de terminaison d'arbre (30) sur un premier logement d'élément de terminaison d'arbre (60) ;
charger le deuxième élément de terminaison d'arbre (32) sur un deuxième logement d'élément de terminaison d'arbre (61) ;
transférer le premier logement d'élément de terminaison d'arbre (60), moyennant quoi un axe principal du premier élément de terminaison d'arbre (30) est disposé coaxialement par rapport à l'axe prédéterminé ;
transférer le deuxième logement d'élément de terminaison d'arbre (61), moyennant quoi un axe principal du deuxième élément de terminaison d'arbre (32) est disposé coaxialement par rapport à l'axe prédéterminé ;
pousser axialement l'arbre cylindrique (15) vers le premier élément de terminaison d'arbre (30) et dans un premier ensemble de serrage (70) ;
actionner les mâchoires (70, 71) du premier ensemble de serrage, moyennant quoi l'arbre cylindrique (15) est bloqué dans la région de la première extrémité de celui-ci, en un emplacement transaxial, où l'axe longitudinal de l'arbre cylindrique est coaxial par rapport à l'axe prédéterminé ;
transférer axialement le deuxième élément de terminaison d'arbre (32) et un deuxième ensemble de serrage (75) en un emplacement axial prédéterminé, dans la région de la deuxième extrémité de l'arbre cylindrique ;
actionner les mâchoires (76) d'un deuxième ensemble de serrage (75), moyennant quoi l'arbre cylindrique est bloqué dans la région de la deuxième extrémité de celui-ci, en un emplacement transaxial, où l'axe longitudinal de l'arbre cylindrique est coaxial par rapport à l'axe prédéterminé ;
faire tourner le premier ensemble de serrage (70) à une vitesse de rotation prédéterminée ;
pousser le premier élément de terminaison d'arbre (30) axialement, en communication avec la première extrémité de l'arbre cylindrique et
pousser le deuxième élément de terminaison d'arbre (32) axialement, en communication avec la deuxième extrémité de l'arbre cylindrique.

39. Procédé selon la revendication 38, dans lequel, avant d'exécuter ladite étape de transfert axial, il est en outre prévu l'étape consistant à dégager le logement d'arbre (17) vers un emplacement distal.

40. Procédé selon la revendication 38, dans lequel il est en outre prévu les étapes, consistant à:
relâcher une première force axiale, appliquée au premier élément de terminaison d'arbre (30), en réponse à la dite étape de première poussée ;
relâcher une deuxième force axiale, appliquée au deuxième élément de terminaison d'arbre (32), en réponse à ladite étape de deuxième poussée ;
relâcher les mâchoires du deuxième ensemble de serrage (75) et
dégager axialement le deuxième ensemble de serrage (75) vers un emplacement axial distal.

41. Procédé selon la revendication 40, dans lequel il est en outre prévu les étapes consistant à :
remettre le logement d'arbre (17) à l'emplacement proximal ;
relâcher les mâchoires du premier ensemble de serrage (70) et
pousser axialement dans la direction opposée l'arbre cylindrique (15) hors du premier ensemble de serrage (70), moyennant l'arbre cylindrique est supporté par le logement d'arbre.

42. Procédé selon la revendication 38, dans lequel ladite étape d'actionnement des mâchoires (71) du premier ensemble de serrage (70) comprend les étapes supplémentaires consistant :
en ce que le premier sous-ensemble actionne le premier sous-ensemble de mâchoires (71) ;
à commander l'exécution de ladite étape d'actionnement du premier sous-ensemble, pour garantir que toutes les mâchoires dudit premier sous-ensemble de mâchoires maintiennent une relation radiale identique durant ladite étape d'actionnement du premier sous-ensemble par rapport à l'axe prédéterminé.

43. Procédé selon la revendication 42, dans lequel ladite étape d'actionnement des mâchoires (71) du premier ensemble de serrage (70) comprend l'étape supplémentaire consistant en ce que le deuxième sous-ensemble actionne un deuxième sous-ensemble de mâchoires (71), ladite étape d'actionnement du deuxième sous-ensemble étant exécutée après ladite étape d'actionnement du premier sous-ensemble.

44. Procédé selon la revendication 43, dans lequel ladite étape d'actionnement des mâchoires (71) du premier ensemble de serrage (70) est exécutée en réponse à une étape d'application d'une pression hydraulique et ladite étape d'actionnement du deuxième sous-ensemble est exécutée en réponse à la pression hydraulique qui excède une ampleur de pression hydraulique prédéterminée.
